(19) Europäisches Patentamt
European Patent Office
Office européen des brevets

(11) **EP 4 625 851 A1**

(12) **EUROPEAN PATENT APPLICATION**
published in accordance with Art. 153(4) EPC

(43) Date of publication:
01.10.2025 Bulletin 2025/40

(21) Application number: 24841969.9

(22) Date of filing: 29.03.2024

(51) International Patent Classification (IPC):
*H04B 17/318* (2015.01)

(52) Cooperative Patent Classification (CPC):
H04B 17/318

(86) International application number:
PCT/CN2024/085011

(87) International publication number:
WO 2025/015969 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.07.2023 CN 202310875603

(71) Applicant: Ruijie Networks Co., Ltd.
Fuzhou, Fujian 350002 (CN)

(72) Inventor: JIN, Genyan
Fuzhou, Fujian 350002 (CN)

(74) Representative: Mathys & Squire
Theatinerstraße 8
80333 München (DE)

(54) **METHOD AND APPARATUS FOR DETERMINING WIRELESS SIGNAL STRENGTH IN REGION, STORAGE MEDIUM, AND ELECTRONIC DEVICE**

(57) This application provides a method for determining a wireless signal strength in an area, a computer-readable storage medium, and an electronic device. The method includes: obtaining building diagram information, wherein the building diagram information comprises a position of a target signal source, a target area, size information of one or more obstacles in the target area, type information of the one or more obstacles, and image calibration information; converting the building diagram information into a polar coordinate system; determining an attenuation amount of a target pixel based on the size information, the type information, the image calibration information, and a propagation path in the polar coordinate system, wherein the propagation path penetrates at least part of the one or more obstacles; and determining a signal strength of the target pixel based on a signal strength of the target signal source and the attenuation amount of the target pixel.

FIG. 4

# EP 4 625 851 A1

## Description

### CROSS-REFERENCE TO RELATED APPLICATIONS

This application claims priority to Chinese Patent Application No. 202310875603.5, filed with the China National Intellectual Property Administration on July 17, 2023 and entitled "METHOD AND APPARATUS FOR DETERMINING WIRELESS SIGNAL STRENGTH IN AREA, AND ELECTRONIC DEVICE", which is incorporated herein by reference in its entirety.

### TECHNICAL FIELD

This application relates to the field of wireless network communication technologies, and in particular, to a method and an apparatus for determining a wireless signal strength in an area, a computer-readable storage medium, and an electronic device.

### BACKGROUND

With popularity of the Internet, the Internet has become a daily necessity for people. As a result, higher requirements are placed on use of the Internet, that is, radio wave signals. Radio wave signals are always affected by buildings, and especially walls with reinforced concrete as skeletons. Therefore, evaluation on distribution of radio wave signal strengths in an expected signal coverage area has become an important task.

### SUMMARY

This application provides a method and an apparatus for determining a wireless signal strength in an area, a computer-readable storage medium, and an electronic device.

According to a first aspect, an exemplary embodiment of this application provides a method for determining a wireless signal strength in an area. The method includes: obtaining building diagram information, where the building diagram information includes a position of a target signal source, a target area corresponding to the target signal source, size information of one or more obstacles in the target area, type information of the one or more obstacles, and image calibration information; converting the building diagram information into a polar coordinate system, where the position of the target signal source is a pole of the polar coordinate system; determining an attenuation amount of a target pixel based on the size information, the type information, the image calibration information, and a propagation path in the polar coordinate system, through which a target signal transmitted by the target signal source is propagated to the target pixel in the target area, where the propagation path penetrates at least part of the one or more obstacles; and determining a signal strength of the target pixel based on a signal strength of the target signal source and the attenuation amount of the target pixel.

In this embodiment, the signal source is set as the pole of the polar coordinate system and polar coordinate conversion is performed on the size information of the obstacles (for example, walls), so that positions of the obstacles can be directly determined based on polar coordinates of the pixel in the polar coordinates. In addition, a quantity of obstacles penetrated by the signal along the propagation path on which the pixel is located can be determined based on a polar radius of the polar coordinates, so that the signal strength of the pixel is efficiently determined. In this way, efficiency of determining signal distribution in the target area is improved, and an objective of determining signal distribution of the target signal source in the area in real time is achieved.

In an embodiment, the attenuation amount includes a dielectric attenuation amount, and the dielectric attenuation amount indicates a decrease in the signal strength caused by the target signal penetrating the at least part of the one or more obstacles; and the determining the attenuation amount of the target pixel based on the size information, the type information, the image calibration information, and the propagation path includes: when the propagation path penetrates the at least part of the one or more obstacles, determining the dielectric attenuation amount based on a number of times that the at least part of the one or more obstacles is penetrated, the size information, and the type information.

In an embodiment, the determining the dielectric attenuation amount based on the number of times that the at least part of the one or more obstacles is penetrated, the size information, and the type information when the propagation path penetrates the at least part of the one or more obstacles includes: determining, based on the size information, one or more target polylines corresponding to the one or more obstacles; and when the propagation path penetrates the one or more target polylines, determining the dielectric attenuation amount based on the number of times that the one or more obstacles are penetrated, the size information, and the type information.

In an embodiment, the determining, based on the size information, the one or more target polylines corresponding to the one or more obstacles includes: mapping the one or more obstacles to the corresponding one or more target polylines based on a center line of the one or more obstacles, where the one or more target polylines include thickness information of the one or more obstacles.

**In** an embodiment, the attenuation amount further includes a distance attenuation amount, and the distance attenuation amount indicates a decrease in the signal strength caused by a radial length of the target pixel; and the determining the attenuation amount of the target pixel based on the size information, the type information, the image calibration information, and the propagation path in the polar coordinate system, through which the target signal transmitted by the target signal source is propagated to the target pixel in the area further includes: determining the distance attenuation amount based on the image calibration information and the radial length of the target pixel.

In an embodiment, the attenuation amount is obtained through calculation by using the following formula:

$$A = 20\log(d) + m * g + 20\log(f) + 20\log(4\pi/c) - G,$$

where A represents the attenuation amount of the target pixel, d represents the polar radius of the target pixel, f represents a frequency of the target signal, c represents a speed of light, G represents an antenna gain of the target signal source, m is the number of times that the at least part of the one or more obstacles is penetrated, and g is a dielectric attenuation coefficient corresponding to the at least part of the one or more obstacles.

In an embodiment, the determining the dielectric attenuation amount based on the number of times that the at least part of the one or more obstacles is penetrated, the size information, and the type information when the propagation path penetrates the at least part of the one or more obstacles includes: determining, based on intersection pixels between the propagation path and the at least part of the one or more obstacles, size information and type information of the at least part of the one or more obstacles and the number of times that the at least part of the one or more obstacles is penetrated; and determining the dielectric attenuation amount based on the size information and the type information of the at least part of the one or more obstacles and the number of times that the at least part of the one or more obstacles is penetrated.

In this embodiment, signal strengths of pixels in the target area in the polar coordinate system are determined, so that positions in a rectangular coordinate system, at which the signal penetrates the obstacles, may be directly determined. This avoids a problem of efficiency reduction caused by the requirement to solve multiple simultaneous equations to calculate intersection points between the signal and the obstacles along propagation paths when directly determining signal strengths at positions in the rectangular coordinate system. In addition, coordinates in the rectangular coordinate system are represented by a distance between the corresponding pixel and a y-axis (that is, a horizontal coordinate) and a distance between the pixel and an x-axis (that is, a vertical coordinate). When the propagation path is not parallel to the x-axis or the y-axis, the position of the pixel on the propagation path first needs to be calculated by taking a square root of a quadratic sum of the horizontal coordinate and the vertical coordinate of the pixel.

In an embodiment, before the determining, based on the intersection pixels between the propagation path and the at least part of the one or more obstacles, the size information and the type information of the at least part of the one or more obstacles and the number of times that the at least part of the one or more obstacles is penetrated, the method further includes: determining the intersection pixels by sliding a sliding window from the pole along an extension direction of the propagation path toward the target pixel.

In an embodiment, after the determining the intersection pixels by sliding the sliding window from the pole along the extension direction of the propagation path toward the target pixel, the method further includes: determining, based on a quantity of the intersection pixels, the number of times that the at least part of the one or more obstacles is penetrated.

In this embodiment, when the quantity of obstacles penetrated by the propagation path is being determined, for the rectangular coordinate system in which a minimum size unit is the same as that in the polar coordinate system, both being pixels, it is difficult to properly set a sliding step size to ensure that all points at which the propagation path penetrates the obstacles from the origin to the pixel are determined. Therefore, the method provided in this embodiment of this application also avoids determining the quantity of obstacles penetrated by the propagation path on which the pixel is located in the rectangular coordinate system. However, when the propagation path is not parallel to a coordinate axis (that is, the x-axis or the y-axis), it is difficult to set the sliding step size to determine the quantity of the penetrated obstacles along the propagation path.

In an embodiment, after the determining the signal strength of the target pixel based on the signal strength of the target signal source and the attenuation amount of the target pixel, the method further includes: converting the building diagram information from the polar coordinate system to a rectangular coordinate system to obtain pixel coordinates corresponding to the target pixel, where a horizontal coordinate and a vertical coordinate of the pixel coordinates are both integers; determining, based on a first mapping relationship between a pixel color and a signal strength interval, the signal strength of the target pixel, and a signal strength interval corresponding to the signal strength, a pixel color corresponding to the pixel coordinates; and assigning a color to the target pixel in the rectangular coordinate system based on the pixel color.

In an embodiment, the converting the building diagram information from the polar coordinate system to the rectangular coordinate system to obtain the pixel coordinates corresponding to the target pixel includes: performing rectangular coordinate conversion on polar coordinates of the target pixel to obtain rectangular coordinates of the target pixel in the rectangular coordinate system; and determining target pixel coordinates closest to the rectangular coordinates as the pixel coordinates in response to the horizontal coordinate and/or the vertical coordinate of the rectangular coordinates being non-integer(s).

In an embodiment, before the determining, based on the first mapping relationship between the pixel color and the signal strength interval, the signal strength of the target pixel, and the signal strength interval corresponding to the signal strength, the pixel color corresponding to the pixel coordinates, the method further includes: determining a target size of a filtering window based on a second mapping relationship between an image resolution of the building diagram information and a size of the filtering window, and processing the signal strength of the target pixel by sliding the filtering window of the target size in the target area, to obtain a denoised signal strength of the target pixel; and the determining, based on the first mapping relationship between the pixel color and the signal strength interval, the signal strength of the target pixel, and the signal strength interval corresponding to the signal strength, the pixel color corresponding to the pixel coordinates includes: determining, based on the first mapping relationship, the denoised signal strength, and the signal strength interval corresponding to the signal strength, the pixel color corresponding to the pixel coordinates.

In this embodiment, after a signal strength of a pixel at each position in the polar coordinate system is determined, inverse polar coordinate conversion (that is, rectangular coordinate conversion) is performed to map the pixels in the polar coordinate system to the rectangular coordinate system, so as to perform color gradient mapping on each pixel in the rectangular coordinate system based on the corresponding signal strength, thereby achieving a millisecond-level simulated signal coverage heat map.

In an embodiment, the target signal source includes a first target signal source and a second target signal source, and the target pixel is located in a target area corresponding to the first target signal source and the second target signal source; and the determining the signal strength of the target pixel based on the signal strength of the target signal source and the attenuation amount of the target pixel includes: determining the signal strength of the target pixel based on a larger one of a first signal strength of the first target signal source at the target pixel and a second signal strength of the second target signal source at the target pixel.

In an embodiment, the size information and the type information of the one or more obstacles are obtained through the following steps: inputting the building diagram information including the target area into a pre-trained semantic segmentation model to obtain the type information of the one or more obstacles; and determining the size information of the one or more obstacles based on the image calibration information in the building diagram information.

According to a second aspect, each exemplary embodiment of this application provides a method for determining a wireless signal strength in an area. The method includes:

determining, based on size information of an obstacle in a target area, in a polar coordinate system with a target signal source as a pole, a target polyline corresponding to the obstacle in the target area, and determining target information about the target polyline penetrated by a propagation path of a target signal, where the target information includes a quantity of obstacles penetrated by a pixel on the propagation path, and polar coordinates of the pixel; and determining signal strength information of the pixel in the target area based on the target information, where the signal strength information includes position information of the pixel and a signal strength at the pixel.

In an embodiment, the determining the signal strength information of the pixel in the target area based on the target information includes:

determining a dielectric attenuation amount and a natural attenuation amount of the signal of the target signal source along the propagation path to the pixel based on the polar coordinates of the pixel and the quantity of the penetrated obstacles; and
determining a signal strength of the signal of the target signal source at the pixel based on the dielectric attenuation amount and the natural attenuation amount, and determining the polar coordinates of the pixel and the signal strength as the signal strength information.

In this implementation, a distance between any pixel and the target signal source can be directly read based on a polar radius of polar coordinates of the pixel, and attenuation of the signal transmitted from the target signal source to the position of the pixel can be determined based on the foregoing distance and the quantity of the penetrated obstacles, so that an objective of efficiently determining the signal strength information of the pixel is achieved.

In an embodiment, the position information includes the polar coordinates and rectangular coordinates; and the determining the signal strength information of the pixel in the target area based on the target information includes:

performing rectangular coordinate conversion on the polar coordinates of the pixel to obtain rectangular coordinates of the pixel in a rectangular coordinate system and pixel coordinates corresponding to the rectangular coordinates, where a horizontal coordinate and a vertical coordinate of the pixel coordinates are both integers;

determining, based on a first mapping relationship between a color and the signal strength interval, a pixel color corresponding to the pixel at the pixel coordinates in the rectangular coordinate system;

assigning a color to the pixel in the rectangular coordinate system based on the pixel color, to obtain a color signal strength distribution diagram; and

reading the signal strength information of the pixel based on the color signal strength distribution diagram.

**In** this implementation, after the signal strength of the pixel in the target area in the polar coordinate system is efficiently determined, rectangular coordinate conversion is further performed. In this way, an objective of representing the signal strength of the pixel in the target area in the rectangular coordinate system is achieved, and readability of signal strength distribution in the target area is enhanced. In addition, color mapping in the rectangular coordinate system is implemented to obtain the color signal strength distribution diagram, that is, heat map rendering is efficiently performed, so that the signal strength distribution in the target area is more intuitively displayed to a user.

According to a third aspect, each exemplary embodiment of this application provides an apparatus for determining a wireless signal strength in an area. The apparatus includes:

a target unit, configured to obtain building diagram information, where the building diagram information includes a position of a target signal source, a target area corresponding to the target signal source, size information of one or more obstacles in the target area, type information of the one or more obstacles, and image calibration information; and convert the building diagram information into a polar coordinate system, where the position of the target signal source is a pole of the polar coordinate system; and

a strength unit, configured to determine an attenuation amount of a target pixel based on the size information, the type information, the image calibration information, and a propagation path in the polar coordinate system, through which a target signal transmitted by the target signal source is propagated to the target pixel in the area, where the propagation path penetrates at least part of the one or more obstacles; and determine a signal strength of the target pixel based on a signal strength of the target signal source and the attenuation amount of the target pixel.

According to a fourth aspect, each exemplary embodiment of this application further provides a readable storage medium. The readable storage medium stores instructions. When the instructions are executed by a processor, the processor is enabled to perform the method according to each exemplary embodiment.

According to a fifth aspect, each exemplary embodiment of this application provides an electronic device, including:

a memory, configured to store a computer program; and

a processor, configured to execute the computer program stored in the memory, to implement the method according to any one of the first aspect and possible implementations thereof.

Other features and advantages of this application will be set forth later in the specification, and in part will be readily apparent from the specification, or may be understood by implementing this application. Objectives and other advantages of this application may be achieved and obtained by using a structure particularly stated in the written specification, claims, and accompanying drawings. It should be understood that the foregoing general descriptions and the following detailed descriptions are merely illustrative and explanative, and do not constitute any limitation on the present disclosure.

## BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show merely the embodiments of this application, and a person of ordinary skill in the art may still derive other drawings from these accompanying drawings without creative efforts.

FIG. 1 is a schematic flowchart of a method for determining a wireless signal strength in an area according to an embodiment of this application.

FIG. 2 is a schematic flowchart of a method for determining a wireless signal strength in an area according to another embodiment of this application.

FIG. 3 is a schematic diagram for directly determining a quantity of walls penetrated by a signal at a pixel in a target area after polar coordinate conversion according to an embodiment of this application.

FIG. 4 is a schematic diagram of a method for obtaining a heat map within a target area according to an embodiment of this application.

FIG. 5 is a schematic diagram of a structure of an apparatus for determining a wireless signal strength in an area according to an embodiment of this application.

FIG. 6 is a schematic diagram of a structure of an electronic device according to an embodiment of this application.

## DESCRIPTION OF EMBODIMENTS

To make the objectives, technical solutions, and advantages of this application clearer, the following clearly and thoroughly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on embodiments of this application without creative efforts shall fall within the protection scope of this application. In absence of conflicts, the embodiments of this application and features in the embodiments may be combined arbitrarily. Moreover, although a logical order is shown in the flowchart, in some cases, the steps shown or described may be performed in an order different from this order.

In the specification, claims, and accompanying drawings of this application, the terms "first" and "second" are used to distinguish between different objects, and not intended to describe a specific order. In addition, the term "include" and any other variant thereof are intended to cover non-exclusive protection. For example, a process, method, system, product, or device that includes a list of steps or units is not limited to the listed steps or units, but optionally includes steps or units not listed, or optionally includes other steps or units inherent to the process, method, product, or device. The term "a plurality of" in this application may mean at least two, for example, two, three, or more. However, the embodiments of this application are not limited thereto.

Currently, there are mainly two methods for evaluating distribution of radio wave signal strengths. The first method is to individually write medium extension data for polylines in a campus model or building model in a computer aided design (Computer Aided Design, CAD) drawing, and individually write signal attenuation values of different frequency bands; and then individually calculate intersection points between signals and polyline objects, and calculate a quantity of intersection points in each grid, to determine information about the polylines penetrated by the intersection points, such as wall penetration positions. This method has a problem of low efficiency due to a large amount of calculation and many steps.

The second method is to set up a network environment in advance in the campus or indoors, then use a detection device to measure signal strengths at N pre-selected detection points, and then perform simulation calculation based on the signal strengths of the N points to obtain signal strengths of remaining positions. However, this method also has the problem of low efficiency because the method requires manually arriving at the pre-selected points in advance to measure the signal strengths.

In view of the problem that the current method for determining signal distribution in an area is inefficient, an embodiment of this application provides a method for determining a wireless signal strength in an area. By using a wireless signal source as a pole, polar coordinate conversion is performed on obstacles in a target area, so that the wireless signal source and the obstacles are all represented in a same polar coordinate system, thereby directly counting a quantity of obstacles penetrated in a same signal propagation direction, directly calculating a signal strength attenuation amount based on this, and efficiently determining signal strengths of the pixels on the propagation path.

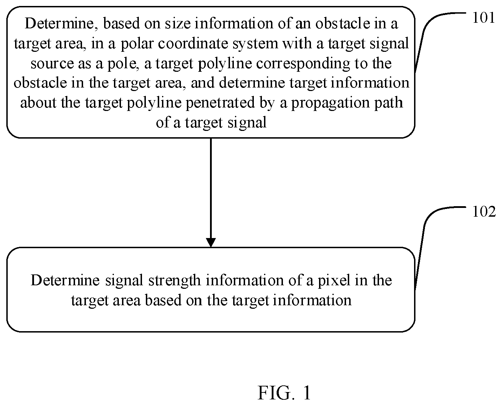

Referring to FIG. 1, an embodiment of this application provides a method for determining a wireless signal strength in an area. The method specifically includes the following implementation steps.

Step 101: Determine, based on size information of an obstacle in a target area, in a polar coordinate system with a wireless signal source as a pole, a target polyline corresponding to the obstacle in the target area, and determine target information about an obstacle area penetrated by a propagation path of a target signal.

Specifically, a size in the polar coordinates may be expressed in pixels. A polar radius of any point in the polar coordinate system, that is, a distance between any point and the pole, may be expressed in pixels. For example, in polar coordinates $(\rho, \Theta)$, $\rho$ represents a polar radius of a corresponding pixel, that is, a distance between the corresponding pixel and the pole (that is, a target signal source), for example, two pixels, and $\Theta$ represents a polar angle, that is, a propagation direction of the current signal of the target signal source, for example, 50°.

The target information may include a quantity of obstacles penetrated by the propagation path of the target signal, and the polar coordinates of the pixel. The target signal represents a signal transmitted by the target signal source. The target polyline represents a continuous line obtained through conversion based on the size information, such as a start position, an end position, and shape information, of the foregoing obstacle. The continuous line may be an arc, a straight line segment, or the like, or may be an arc and a straight line segment that are connected.

Specifically, the target signal source may be a wireless signal source, such as a wireless router, a wireless access point (Access Point, AP), or a base station. A signal transmitted by the target signal source is a target signal.

Correspondingly, a radio wave transmitted by the wireless signal source may be a Wi-Fi (Wireless Fidelity, wireless fidelity) signal, or an electromagnetic wave signal from a base station. The target area is a coverage area of the target signal centered on the target signal source.

The obstacle may be a building or part of a building. Factors causing signal attenuation in the building or the part of the building include an obstacle type such as a wall, and other factors, in addition to a distance between the wireless signal source and the obstacle.

In the polar coordinate system, coordinates are represented by a combination of a polar radius and a polar angle. Therefore, after polar coordinate conversion is performed on obstacles such as walls in a rectangular coordinate system, information about obstacles penetrated by each propagation path of the target signal source can be intuitively obtained. The information about the penetrated obstacles can be used to determine an attenuation amount of the signal transmitted by the target signal source.

The information about the penetrated obstacles includes a distance between each point on the propagation path and the target signal source (that is, the pole), positions of the penetrated obstacles, a quantity of the penetrated obstacles (or the number of times that the obstacles are penetrated), and the like.

In some embodiments, the information about the penetrated obstacles may further include a radiation angle of the target signal source, that is, a polar angle of polar coordinates of a target pixel corresponding to the propagation path. In this embodiment, the attenuation amount can be obtained more quickly by using the polar coordinates of the target pixel (that is, the polar radius (related to the propagation path) and the polar angle (related to the radiation angle of the target signal source)), the positions of the penetrated obstacles, and the number of times that the obstacles are penetrated, so that a signal strength in the area is determined.

The polar coordinate system in this embodiment of this application uses one pixel as a minimum size unit, and each point on the propagation path is a pixel. The distance between each point and the target signal source (that is, the pole) is a polar radius in the polar coordinates of the pixel. The positions of the penetrated obstacles are polar coordinates of intersection points between the propagation path and the obstacles. The quantity of the penetrated obstacles indicates the quantity of obstacles penetrated before the signal transmitted along the propagation path reaches the pixel.

The quantity of the penetrated obstacles is determined by sliding a sliding window with a sliding step size of 1 pixel from the pole along an extension direction of the polar radius to the pixel. Before the sliding window slides to the pixel, when the sliding window slides to the intersection point, polar coordinates of the intersection point can be directly read and 1 is added to the quantity of the penetrated obstacles until the pixel is reached. In this way, the quantity of the penetrated obstacles corresponding to the pixel and the corresponding positions of the penetrated obstacles can be determined.

In some embodiments, the obstacles are walls, and the information about the penetrated obstacles is wall penetration information. The wall penetration information includes a distance between a specified pixel on the corresponding propagation path and the target signal source (that is, the pole), a wall penetration position (that is, polar coordinates of the wall-penetrating pixel), and a quantity of penetrated walls.

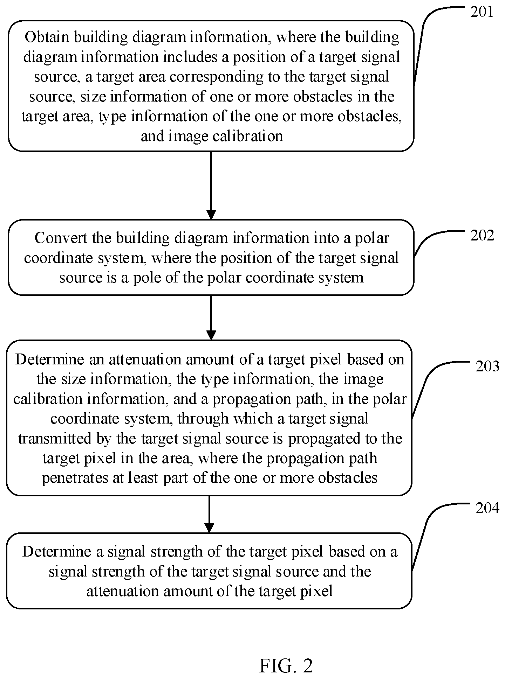

FIG. 2 is a schematic flowchart of a method for determining a wireless signal strength in an area according to another embodiment of this application. The method specifically includes the following steps.

Step 201: Obtain building diagram information, where the building diagram information includes a position of a target signal source, a target area corresponding to the target signal source, size information of one or more obstacles in the target area, type information of the one or more obstacles, and image calibration information.

The target area may be an area within a preset range that can be covered by a signal transmitted by the target signal source.

**In** this embodiment, there is one target signal source. In other embodiments, there may also be a plurality of target signal sources, which will be described in detail in the following embodiments.

The size information of the obstacle may include a thickness, a height, and surface roughness of the obstacle, and the like.

The type information of the obstacle indicates the type of the obstacle. For example, it may be a brick wall, a wooden wall, a glass wall, a window, or a door.

The image calibration information indicates a ratio of a pixel distance between pixels in the building diagram information to a distance between corresponding actual positions in reality.

The building diagram information may be a CAD building floor plan file or another type of file, which is not specifically limited in this application. The building diagram information may be used for an indoor building diagram or an outdoor building diagram, which is not specifically limited in this application.

Step 202: Convert the building diagram information into a polar coordinate system, where the position of the target signal source is a pole of the polar coordinate system.

Step 203: Determine an attenuation amount of a target pixel based on the size information, the type information, the image calibration information, and a propagation path in the polar coordinate system, through which a target signal transmitted by the target signal source is propagated to the target pixel in the target area, where the propagation path penetrates at least part of the one or more obstacles.

The target pixel indicates a mapped pixel in the building diagram information for an actual position at which a signal strength is to be determined.

The at least part of the one or more obstacles may refer to one or more of the one or more obstacles, and may also refer to a specific part of a single obstacle of the one or more obstacles.

Step 204: Determine a signal strength of the target pixel based on a signal strength of the target signal source and the attenuation amount of the target pixel.

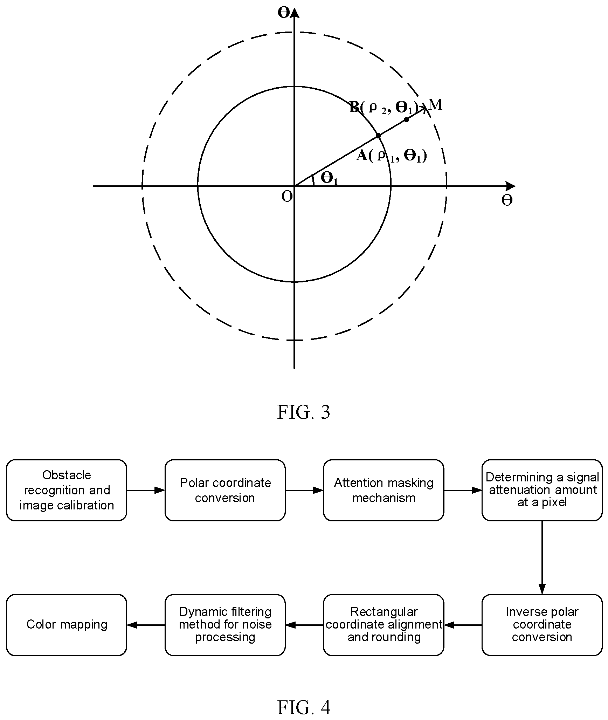

FIG. 3 is a schematic diagram of walls after polar coordinate conversion according to an embodiment of this application. As shown in FIG. 3, an area shown in a dashed circle is a target area, and a solid circle is a target polyline. A vector OM is a propagation path in a $\Theta_1$ direction. Point A is a wall penetration position. Based on polar coordinates of point A, the following may be obtained: A quantity of penetrated walls before wall penetration position A in the $\Theta_1$ direction is 0, and a quantity of penetrated walls after position A is 1.

In this way, target information about pixels on the propagation path of the target signal at each angle can be obtained from the polar coordinate system. For example, wall penetration information of point B includes: a quantity of penetrated walls is 1, and a position of pixel B is identified by polar coordinates $(\rho_2, \Theta_2)$ with a polar radius of $\rho_2$ and a polar angle of $\Theta_2$.

For the size information of the obstacle, an example in which the obstacle is a wall is used for description.

The size information of the obstacle includes at least a start position and an end position of the wall in a length direction, and a thickness in a width direction.

In some embodiments, a building diagram including a target area is input into a pre-trained semantic segmentation model, so that the semantic segmentation model recognizes obstacles in the building diagram and obtains size data indicating size information of the obstacles in the target area. The size data may be vector data.

The building diagram may include only a floor plan of the target area, or may be a floor plan including part of the target area and other areas. When the building diagram does not merely include the target area, when a building area is input into the pre-trained segmentation model, it is also necessary to input area data for instructing the pre-trained semantic segmentation model to select the target area, so that the pre-trained semantic segmentation model can select the target area in the building diagram and recognize the type, size, and position of the wall to obtain obstacle information including obstacle size data. In other words, the obstacle information may include a start point, an end point, and the thickness of the wall, and the wall type used to determine/obtain a dielectric attenuation coefficient.

The area data may be, for example, a shape of the target area, coordinates of a center position of the target area, and coordinates of key points at an edge of the target area.

Further, the pre-trained semantic segmentation model is described below.

First, a training image set is obtained. The training image set includes a plurality of original building diagrams and corresponding data-augmented images. Each image in the training image set includes a label corresponding to the image, and the label includes the type of an obstacle in the image and a size of the obstacle. The type of the obstacle may be, for example, a window, a door, or a wall. The size of the obstacle may be, for example, a start point and an end point in a length direction, and a thickness in a width direction, and may further include a height.

The original building diagram may be a CAD floor plan or a 3D aerial building diagram. The data-augmented image may be obtained as follows: Data augmentation processing such as black-white conversion, random erasing, and cropping is directly performed on the original building diagram with a label, to obtain a data-augmented image corresponding to the original building diagram and a label of the data-augmented image corresponding to the original building diagram.

Then the training image set is input into a to-be-trained semantic segmentation model to obtain obstacle type information.

Then a first error between a first type indicating the obstacle type and output by the to-be-trained semantic segmentation model and an obstacle type of the label corresponding to the image and an indicated obstacle type output by the to-be-trained semantic segmentation model are determined based on the label corresponding to each image in the training image set.

A cross-entropy function is used as a loss function, and parameters of the to-be-trained semantic segmentation model are inversely adjusted, until the loss function converges to an optimal value to obtain a trained semantic segmentation model.

Therefore, when it is necessary to determine a wireless signal strength in an area, a building diagram including a target area can be input into the pre-trained semantic segmentation model to obtain types of obstacles in the target area, such as walls, doors, and windows.

**In** some embodiments, an obstacle type granularity in a label at a training stage can be further refined. For example, walls can be refined as solid walls, hollow walls, and the like, to achieve fine-grained recognition of obstacle types in the target area.

Step 102: Determine signal strength information of a pixel in the target area based on the target information.

The signal strength information includes position information of the pixel and a signal strength at the pixel.

Specifically, the position information of the pixel can be directly determined based on polar coordinates of the pixel: a polar radius and a polar angle. The dielectric attenuation amount and natural attenuation amount of the signal of the target signal source along the propagation path to the pixel can also be determined based on the polar radius, the polar angle, and the quantity of the penetrated obstacles.

The dielectric attenuation amount indicates a value of a decrease in the signal strength of the target signal caused by the target signal penetrating an obstacle. The distance attenuation amount (that is, a natural attenuation amount) indicates a value of a decrease in the signal strength at the pixel caused by a distance between the current pixel and the target signal source.

Because the polar radius is determined by using the building diagram, and the building diagram is obtained by performing proportional scaling based on an actual size, when the distance is used to calculate the dielectric attenuation amount and the natural attenuation amount, it is also necessary to restore the distance based on a scaling proportion of the building diagram, and use an actual distance value obtained thereby to calculate the dielectric attenuation amount and the natural attenuation amount. This distance restoration can also be obtained by using the foregoing pre-trained semantic segmentation model.

Then a total attenuation amount of the signal of the target signal source when the signal reaches the pixel can be determined based on the dielectric attenuation amount and the natural attenuation amount, and the signal strength of the pixel can be determined accordingly, that is, the signal strength of the pixel is obtained by subtracting the total attenuation amount from the signal strength of the target signal source. The polar coordinates and signal strength of the pixel are determined as signal strength information of the pixel.

The total attenuation amount A can be obtained through calculation by using the following formula:

$$A = 20\log(d) + m * g + 20\log(f) + 20\log(4\pi/c) - G,$$

where A represents the attenuation amount of the pixel, d represents the polar radius (that is, a transmission distance) of the pixel, f represents a frequency of the signal, c represents a speed of light, G is an antenna gain, m is the quantity of the penetrated obstacles, and g is a dielectric attenuation coefficient corresponding to the obstacle type.

In the formula for the total attenuation amount A, $20\log(d)$ indicates attenuation of the signal strength of the signal as the distance changes, that is, distance attenuation; $m * g$ indicates attenuation of the signal strength caused by the signal penetrating an obstacle, that is, dielectric attenuation; and $20\log(f) + 20\log(4\pi/c)$ represents an opposite number of a signal penetration capability.

Further, if the size of the target area is not greater than the signal coverage range of the target signal source, in the target area, a length of the propagation path of the signal of the target signal source is less than or equal to a radius of a preset signal coverage range of the target signal source, thereby avoiding a problem of efficiency reduction in determining a signal strength caused by signals from distant signal sources.

When the preset signal coverage ranges of signal sources overlap, their propagation paths and target areas may intersect or overlap. In some embodiments, a quantity of target signal sources is N, where N is an integer greater than 1. In response to a quantity of signal strengths at a pixel being 1, it indicates that signals from a plurality of signal sources do not overlap at the pixel. Alternatively, in response to a quantity of signal strengths at a pixel being greater than 1, it means that signals from a plurality of signal sources overlap at the pixel. In this case, a signal strength with a largest value is determined as the signal strength of the pixel.

Further, the position information includes polar coordinates and rectangular coordinates. To enable a user to obtain distribution of signal strengths in the target area, inverse polar coordinate conversion may be performed on the signal strength information determined based on the polar coordinate system, and especially the polar coordinates in the signal strength information, to obtain signal strength information in the rectangular coordinate system for the pixel in the polar coordinate system, that is, obtain corresponding coordinates and signal strength in the rectangular coordinate system for the pixel in the polar coordinate system.

A signal strength of a pixel in the polar coordinate system is equal to a signal strength of a corresponding pixel in the rectangular coordinate system.

The position in the rectangular coordinate system includes rectangular coordinates obtained by converting the polar coordinates of the pixel. Both the polar coordinate system and the rectangular coordinate system use the pixel as a minimum size unit. Therefore, radial coordinates in the polar coordinates are all integers. However, after some polar coordinates with integer radial coordinates are converted from the polar coordinate system to the rectangular coordinate system, the corresponding rectangular coordinates (a horizontal coordinate and/or a vertical coordinate) may be non-integers. Therefore, to establish a correspondence between the polar coordinate system and the rectangular coordinate system before and after the conversion, coordinate alignment may be performed on the rectangular coordinates to obtain pixel coordinates whose horizontal coordinate and vertical coordinate are both integers. Specifically, the rectangular coordinates of the pixel can be processed as follows: in response to the horizontal coordinate and the vertical coordinate in the rectangular coordinates being both integers, determining that the rectangular coordinates are the pixel coordinates, that is, the two are equal; or in response to the horizontal coordinate and/or the vertical coordinate of the rectangular coordinates being non-integer(s), determining target pixel coordinates closest to the rectangular coordinates as the pixel coordinates.

The target pixel coordinates are a horizontal coordinate and a vertical coordinate of an original pixel in the rectangular coordinate system. Therefore, the horizontal coordinate and the vertical coordinate in the target pixel coordinates are both integers. The original pixel may or may not coincide with the rectangular coordinates obtained by converting any pixel in the polar coordinate system.

In some embodiments, after the rectangular coordinates of the pixel are obtained, the rectangular coordinates can be processed by using a nearest neighbor interpolation method, so that the horizontal coordinate and the vertical coordinate of the processed pixel coordinates are both integers. Therefore, the pixel coordinates in the rectangular coordinate system include rectangular coordinates and pixel coordinates.

In this way, the signal strength information of each pixel in the target area in the rectangular coordinate system can be obtained.

Then a pixel color corresponding to each pixel in the rectangular coordinate system can be determined based on a first mapping relationship between a color and a signal strength interval, the pixel coordinates of the pixel, and the signal strength of the pixel; and a color is assigned to the pixel in the rectangular coordinate system based on the pixel color of the pixel, to obtain a color signal strength distribution diagram.

Finally, the signal strength information of the pixel is read based on the color signal strength distribution diagram.

Further, to improve a visual effect and reduce noise (that is, signal strength noise) caused by the foregoing coordinate alignment or calculation error, a filtering algorithm may be used to remove the noise.

In some embodiments, a target size of the filtering window is determined based on a resolution of an image in the rectangular coordinate system and a second mapping relationship between the image resolution and the filtering window. The target size of the filtering window is inversely proportional to the resolution. The filtering window of the target size slides in the target area in the rectangular coordinate system, and the signal strength of the pixel is processed to remove the noise, so that the noise of the signal strength of the pixel in the sliding filtering window of the target size is less than a preset threshold. The resolution of the image is determined based on a ratio of the pixel distance to the actual distance between two points in the image, and the image resolution can be changed based on a user setting.

Specifically, the filtering window slides from any vertex of the target area by using a dynamic filtering algorithm. For example, a shape of the target area is a rectangle, and the filtering window starts to slide from a vertex of an upper left corner of the rectangle. Each slide determines an average or a median of the signal strength of each pixel in the filtering window. When a difference between a signal strength of a pixel at a center of the filtering window and the average or median exceeds a preset threshold, it indicates that the signal strength noise of the pixel at the center of the filtering window is excessively large. Therefore, the signal strength of the pixel at the center of the filtering window is adjusted, so that the difference is within the preset threshold. The signal strength of the pixel at the center of the filtering window is adjusted herein without limitation in this embodiment of this application. For example, the signal strength of the pixel at the center of the filtering window can be set to the foregoing average or median. For example, the signal strength of the pixel at the center of the filtering window can be correspondingly reduced or increased, so that a difference between a modified signal strength and the foregoing average or median is exactly less than the preset threshold.

In this way, as the filtering window slides, the signal strength of each pixel can be processed individually, so that the signal strength noise of the pixel in the target area is less than the preset threshold, thereby achieving smooth transition of the signal strength of each pixel in the target area.

Therefore, the pixel color corresponding to the pixel can be determined based on the first mapping relationship and the signal strength of the pixel in the denoised signal strength information. A color may be further assigned to the pixel in the target area based on the correspondence between each pixel and the pixel color, to obtain a color signal strength distribution diagram.

Based on the foregoing method for determining a wireless signal strength in an area in steps 101 and 102, the following describes obtaining of a heat map by using an example in which a target signal source is an AP and there are no signals from other wireless signal sources within a signal coverage range of the AP. Refer to FIG. 4.

First, an obtained building diagram is input into a pre-trained semantic segmentation model, so that types of obstacles that cause signal attenuation in the building diagram are recognized.

Then image calibration is performed on the building diagram based on image calibration information, thereby obtaining size information of obstacles including but not limited to walls, windows, and doors, and an actual distance between adjacent pixels in the building diagram. The image calibration information indicates a ratio between a distance between pixels in the building diagram to a corresponding distance between actual positions in actual space.

A target polyline corresponding to a shape and direction of an obstacle is drawn in a polar coordinate system with the AP as a pole based on size information of the obstacle. An attention masking mechanism is introduced. A target area corresponding to an AP signal coverage range is determined only in the polar coordinate system. Therefore, a length of a propagation path does not exceed the target area. Generally, a preset signal coverage range of the target signal source is represented as a circle, and the length of the propagation path in the target area is less than or equal to a radius of the preset signal coverage range of the target signal source.

In the target area, based on an actual distance between adjacent pixels in the building diagram output by the pre-trained semantic segmentation model, and a quantity of obstacles penetrated by each pixel obtained by reading the diagram in the polar coordinate system, in a propagation direction of the pixel, a signal attenuation amount and a signal strength at the pixel are determined. Therefore, polar coordinates and the signal strength of the pixel constitute signal strength information of the pixel.

Then inverse polar coordinate conversion is performed based on the polar coordinates, and rectangular coordinates are aligned and rounded by using a nearest neighbor interpolation method, to obtain a signal strength of a pixel at a corresponding position in the rectangular coordinate system.

Then signal strengths of pixels on various pixel coordinates in the rectangular coordinate system are processed by using a dynamic filtering method for noise processing. In addition, gradient color mapping is performed. Different colors are used to represent signal strengths in different signal strength intervals, to efficiently obtain signal strength distribution in the target area, so that a user can intuitively obtain signal strength distribution of each area in the target area in the rectangular coordinate system.

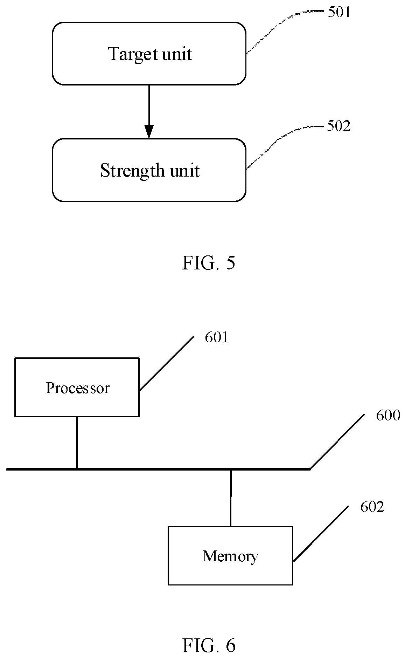

Based on the same inventive concept, an embodiment of this application provides an apparatus for determining a wireless signal strength in an area. The apparatus corresponds to the method for determining a wireless signal strength in an area shown in FIG. 1. For the specific implementation of the apparatus, refer to the description of the embodiment of the method. Repeated parts are not described again. Referring to FIG. 5, the apparatus includes a target unit 501 and a strength unit 502.

The target unit 501 is configured to determine, based on size information of an obstacle in a target area, in a polar coordinate system with a target signal source as a pole, a target polyline corresponding to the obstacle in the target area, and determine target information about the target polyline penetrated by a propagation path of a target signal.

The target information includes a quantity of obstacles penetrated by the propagation path, and polar coordinates of pixels.

The strength unit 502 is configured to determine signal strength information of the pixel in the target area based on the target information.

The signal strength information includes position information of the pixel and a signal strength at the pixel.

The strength unit 502 is specifically configured to determine a dielectric attenuation amount and a natural attenuation amount of the signal of the target signal source along the propagation path to the pixel based on the polar coordinates of the pixel and the quantity of the penetrated obstacles; and determine a signal strength of the signal of the target signal source at the pixel based on the dielectric attenuation amount and the natural attenuation amount, and determine the polar coordinates of the pixel and the signal strength as the signal strength information.

The position information includes the polar coordinates and rectangular coordinates. The strength unit 502 is further configured to perform rectangular coordinate conversion on the polar coordinates of the pixel to obtain rectangular coordinates of the pixel in a rectangular coordinate system and pixel coordinates corresponding to the rectangular coordinates, where a horizontal coordinate and a vertical coordinate of the pixel coordinates are both integers; determine, based on a first mapping relationship between a color and the signal strength interval, a pixel color corresponding to the pixel at the pixel coordinates in the rectangular coordinate system; assign a color to the pixel in the rectangular coordinate system based on the pixel color, to obtain a color signal strength distribution diagram; and read the signal strength information of the pixel based on the color signal strength distribution diagram.

Further, the strength unit 502 is further configured to: perform rectangular coordinate conversion on the polar coordinates of the pixel to obtain the rectangular coordinates of the pixel in the rectangular coordinate system;

determine the rectangular coordinates as the pixel coordinates in response to a horizontal coordinate and a vertical coordinate of the rectangular coordinates being both integers; or
determine target pixel coordinates closest to the rectangular coordinates as the pixel coordinates in response to the horizontal coordinate and/or the vertical coordinate of the rectangular coordinates being non-integer(s).

The strength unit 502 is further configured to: determine a target size of a filtering window based on a second mapping relationship between an image resolution and the filtering window, and process the signal strength of the pixel by sliding the filtering window of the target size in the target area, to make noise of the signal strength of the pixel in the filtering window less than a preset threshold and obtain denoised signal strength information; and determine, based on the first mapping relationship and the signal strength of the pixel in the denoised signal strength information, the pixel color corresponding to the pixel.

Further, a quantity of target signal sources is N, where N is an integer greater than 1; in the target area, a length of the propagation path is less than or equal to a radius of a preset signal coverage range of the target signal source; and the strength unit 502 is further configured to determine a signal strength with a largest value as the signal strength of the pixel in response to the quantity of signal strengths at the pixel being greater than 1.

Further, the size information of the obstacle includes the type and size of the obstacle. The apparatus for determining a wireless signal strength in an area further includes an information unit. The information unit is specifically configured to: input a building diagram including the target area into a pre-trained semantic segmentation model to obtain the type of the obstacle; and determine the size of the obstacle based on a ratio of a pixel distance between pixels in the building diagram to an actual distance between the pixels, where the type and the size constitute the size information of the obstacle.

Based on the same inventive concept, an embodiment of this application further provides a readable storage medium. The readable storage medium stores instructions. When the instructions are executed by a processor, the processor is enabled to perform the method according to each exemplary embodiment.

Based on the same inventive concept as the method for determining a wireless signal strength in an area, an embodiment of this application further provides an electronic device. The electronic device can implement the function of the foregoing method for determining a wireless signal strength in an area. Referring to FIG. 6, the electronic device includes:

at least one processor 601 and a memory 602 connected to the at least one processor 601. A specific connection medium between the processor 601 and the memory 602 is not limited in this embodiment of this application. FIG. 6 shows an example in which the processor 601 and the memory 602 are connected by a bus 600. The bus 600 in FIG. 6 is represented by a bold line. A connection manner between other components is only an example for description and is not limited. The bus 600 may be classed into an address bus, a data bus, a control bus, and the like. For ease of representation, only one bold line is used to represent the bus in FIG. 6, but this does not mean that there is only one bus or only one type of bus. Alternatively, the processor 601 may also be referred to as a controller, and the name is not limited.

In this embodiment of this application, the memory 602 stores instructions executable by the at least one processor 601. By executing the instructions stored in the memory 602, the at least one processor 601 can perform the method for determining a wireless signal strength in an area discussed above. The processor 601 can implement functions of the modules in the apparatus shown in FIG. 5.

The processor 601 is a control center of the apparatus, can use various interfaces and lines to connect various parts of the entire control device, and execute various functions and data processing of the apparatus by running or executing the instructions stored in the memory 602 and invoking data stored in the memory 602, to perform overall monitoring on the apparatus.

In a possible design, the processor 601 may include one or more processing units. An application processor and a modem processor may be integrated in the processor 601. The application processor mainly processes an operating system, a user interface, an application program, and the like. The modem processor mainly processes wireless communication. It may be understood that the modem processor may alternatively be not integrated in the processor 601. In some embodiments, the processor 601 and the memory 602 may be implemented on a same chip. In some embodiments, the processor 601 and the memory 602 may also be implemented separately on separate chips.

The processor 601 may be a general-purpose processor, for example, a central processing unit (CPU), a digital signal processor, an application-specific integrated circuit, a field programmable gate array or another programmable logic device, a discrete gate or a transistor logic device, or a discrete hardware component, and may implement or perform the methods, steps, and logical block diagrams disclosed in the embodiments of this application. The general-purpose processor may be a microprocessor or any conventional processor or the like. The steps of the method for determining a wireless signal strength in an area disclosed with reference to the embodiments of this application may be directly performed and completed by using a hardware processor, or may be performed and completed by using a combination of hardware in the processor and a software module.

As a non-volatile computer-readable storage medium, the memory 602 may be configured to store non-volatile software programs, non-volatile computer-executable programs, and modules. The memory 602 may include at least one type of storage medium, for example, may include a flash memory, a hard disk, a multimedia card, a memory card, a random access memory (Random Access Memory, RAM), a static random access memory (Static Random Access Memory, SRAM), a programmable read-only memory (Programmable Read Only Memory, PROM), a read-only memory (Read Only Memory, ROM), an electrically erasable programmable read-only memory (Electrically Erasable Programmable Read-Only Memory, EEPROM), a magnetic memory, a magnetic disk, an optical disc, or the like. The memory 602 is but not limited to any other medium that can be used to carry or store desired program code in a form of an instruction or a data structure and can be accessed by a computer. The memory 602 in the embodiments of this application may alternatively be a circuit or any other apparatus that can implement a storage function, and is configured to store a program instruction and/or data.

Based on the design and programming of the processor 601, code corresponding to the method for determining a wireless signal strength in an area described in the foregoing embodiment can be embedded into the chip, so that the chip can perform the steps of the method for determining a wireless signal strength in an area in the embodiment shown in FIG. 1 during running. How to design and program the processor 601 is a technology known to a person skilled in the art, and details are not described herein.

It may be clearly understood by a person skilled in the art that, for the purpose of convenient and brief description, division of the foregoing functional modules is used as an example for illustration. In an actual application, the foregoing functions can be allocated to different functional modules and implemented based on a requirement, that is, an internal structure of the apparatus is divided into different functional modules to implement all or some of the functions described above. For a specific working process of the foregoing system, apparatus, and unit, refer to a corresponding process in the foregoing method embodiments, and details are not described herein again.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods in the embodiments of this application. The foregoing storage medium includes any medium that can store program code, such as a universal serial bus flash disk (Universal Serial Bus flash disk), a removable hard disk, a read-only memory (Read-Only Memory, ROM), a random access memory (Random Access Memory, RAM), a magnetic disk, or an optical disc.

Apparently, a person skilled in the art may make various changes and variations to this application without departing from the spirit and scope of this application. Therefore, this application is intended to cover these modifications and variations of this application provided that they fall within the protection scope defined by the following claims and equivalent technologies thereof.

**Claims**

1. A method for determining a wireless signal strength in an area, comprising:

   obtaining building diagram information, wherein the building diagram information comprises a position of a target signal source, a target area corresponding to the target signal source, size information of one or more obstacles in the target area, type information of the one or more obstacles, and image calibration information;
   converting the building diagram information into a polar coordinate system, wherein the position of the target signal source is a pole of the polar coordinate system;
   determining an attenuation amount of a target pixel based on the size information, the type information, the image calibration information, and a propagation path in the polar coordinate system, through which a target signal transmitted by the target signal source is propagated to the target pixel in the target area, wherein the propagation path penetrates at least part of the one or more obstacles; and
   determining a signal strength of the target pixel based on a signal strength of the target signal source and the attenuation amount of the target pixel.

2. The method according to claim 1, wherein the attenuation amount comprises a dielectric attenuation amount, and the dielectric attenuation amount indicates a decrease in the signal strength caused by the target signal penetrating the at least part of the one or more obstacles; and
   the determining the attenuation amount of the target pixel based on the size information, the type information, the image calibration information, and the propagation path comprises:

when the propagation path penetrates the at least part of the one or more obstacles, determining the dielectric attenuation amount based on a number of times that the at least part of the one or more obstacles is penetrated, the size information, and the type information.

3. The method according to claim 2, wherein the determining the dielectric attenuation amount based on the number of times that the at least part of the one or more obstacles is penetrated, the size information, and the type information when the propagation path penetrates the at least part of the one or more obstacles comprises:

determining, based on the size information, one or more target polylines corresponding to the one or more obstacles; and
when the propagation path penetrates the one or more target polylines, determining the dielectric attenuation amount based on the number of times that the one or more obstacles are penetrated, the size information, and the type information.

4. The method according to claim 3, wherein the determining, based on the size information, the one or more target polylines corresponding to the one or more obstacles comprises:
mapping the one or more obstacles to the corresponding one or more target polylines based on a center line of the one or more obstacles, wherein the one or more target polylines comprise thickness information of the one or more obstacles.

5. The method according to claim 2, wherein the attenuation amount further comprises a distance attenuation amount, and the distance attenuation amount indicates a decrease in the signal strength caused by a radial length of the target pixel; and
the determining the attenuation amount of the target pixel based on the size information, the type information, the image calibration information, and the propagation path in the polar coordinate system, through which the target signal transmitted by the target signal source is propagated to the target pixel in the area further comprises:
determining the distance attenuation amount based on the image calibration information and the radial length of the target pixel.

6. The method according to claim 5, wherein the attenuation amount is obtained through calculation by using the following formula:

$$A = 20\log(d) + m * g + 20\log(f) + 20\log(4\pi/c) - G,$$

wherein A represents the attenuation amount of the target pixel, d represents the polar radius of the target pixel, f represents a frequency of the target signal, c represents a speed of light, G represents an antenna gain of the target signal source, m is the number of times that the at least part of the one or more obstacles is penetrated, and g is a dielectric attenuation coefficient corresponding to the at least part of the one or more obstacles.

7. The method according to claim 2, wherein the determining the dielectric attenuation amount based on the number of times that the at least part of the one or more obstacles is penetrated, the size information, and the type information when the propagation path penetrates the at least part of the one or more obstacles comprises:

determining, based on an intersection pixel between the propagation path and the at least part of the one or more obstacles, size information and type information of the at least part of the one or more obstacles and the number of times that the at least part of the one or more obstacles is penetrated; and
determining the dielectric attenuation amount based on the size information and the type information of the at least part of the one or more obstacles and the number of times that the at least part of the one or more obstacles is penetrated.

8. The method according to claim 7, wherein before the determining, based on the intersection pixel between the propagation path and the at least part of the one or more obstacles, the size information and the type information of the at least part of the one or more obstacles and the number of times that the at least part of the one or more obstacles is penetrated, the method further comprises:
determining the intersection pixel by sliding a sliding window from the pole along an extension direction of the propagation path toward the target pixel.

9. The method according to claim 8, wherein after the determining the intersection pixel by sliding the sliding window from the pole along the extension direction of the propagation path toward the target pixel, the method further comprises: determining, based on a quantity of intersection pixels, the number of times that the at least part of the one or more obstacles is penetrated.

10. The method according to claim 1, wherein after the determining the signal strength of the target pixel based on the signal strength of the target signal source and the attenuation amount of the target pixel, the method further comprises:

   converting the building diagram information from the polar coordinate system to a rectangular coordinate system to obtain pixel coordinates corresponding to the target pixel, wherein a horizontal coordinate and a vertical coordinate of the pixel coordinates are both integers;
   determining, based on a first mapping relationship between a pixel color and a signal strength interval, the signal strength of the target pixel, and a signal strength interval corresponding to the signal strength, a pixel color corresponding to the pixel coordinates; and
   assigning a color to the target pixel in the rectangular coordinate system based on the pixel color.

11. The method according to claim 10, wherein the converting the building diagram information from the polar coordinate system to the rectangular coordinate system to obtain the pixel coordinates corresponding to the target pixel comprises:

   performing rectangular coordinate conversion on polar coordinates of the target pixel to obtain rectangular coordinates of the target pixel in the rectangular coordinate system; and
   determining target pixel coordinates closest to the rectangular coordinates as the pixel coordinates in response to the horizontal coordinate and/or the vertical coordinate of the rectangular coordinates being non-integer(s).

12. The method according to claim 10, wherein before the determining, based on the first mapping relationship between the pixel color and the signal strength interval, the signal strength of the target pixel, and the signal strength interval corresponding to the signal strength, the pixel color corresponding to the pixel coordinates, the method further comprises:

   determining a target size of a filtering window based on a second mapping relationship between an image resolution of the building diagram information and a size of the filtering window, and processing the signal strength of the target pixel by sliding the filtering window of the target size in the target area, to obtain a denoised signal strength of the target pixel; and
   the determining, based on the first mapping relationship between the pixel color and the signal strength interval, the signal strength of the target pixel, and the signal strength interval corresponding to the signal strength, the pixel color corresponding to the pixel coordinates comprises:
   determining, based on the first mapping relationship, the denoised signal strength, and the signal strength interval corresponding to the signal strength, the pixel color corresponding to the pixel coordinates.

13. The method according to any one of claims 1 to 12, wherein the target signal source comprises a first target signal source and a second target signal source, and the target pixel is located in a target area corresponding to the first target signal source and the second target signal source; and
   the determining the signal strength of the target pixel based on the signal strength of the target signal source and the attenuation amount of the target pixel comprises:
   determining the signal strength of the target pixel based on a larger one of a first signal strength of the first target signal source at the target pixel and a second signal strength of the second target signal source at the target pixel.

14. The method according to any one of claims 1 to 13, wherein the size information and the type information of the one or more obstacles are obtained through the following steps:

   inputting the building diagram information comprising the target area into a pre-trained semantic segmentation model to obtain the type information of the one or more obstacles; and
   determining the size information of the one or more obstacles based on the image calibration information in the building diagram information.

15. An apparatus for determining a wireless signal strength in an area, comprising:

a target unit, configured to obtain building diagram information, wherein the building diagram information comprises a position of a target signal source, a target area corresponding to the target signal source, size information of one or more obstacles in the target area, type information of the one or more obstacles, and image calibration information; and convert the building diagram information into a polar coordinate system, wherein the position of the target signal source is a pole of the polar coordinate system; and

a strength unit, configured to determine an attenuation amount of a target pixel based on the size information, the type information, the image calibration information, and a propagation path in the polar coordinate system, through which a target signal transmitted by the target signal source is propagated to the target pixel in the area, wherein the propagation path penetrates at least part of the one or more obstacles; and determine a signal strength of the target pixel based on a signal strength of the target signal source and the attenuation amount of the target pixel.

16. A computer-readable storage medium, wherein the readable storage medium stores instructions, and when the instructions are executed by a processor, the processor is enabled to perform the method according to any one of claims 1 to 14.

17. An electronic device, comprising:

a memory, configured to store a computer program; and
a processor, configured to execute the computer program stored in the memory, to implement the method according to any one of claims 1 to 14.

Determine, based on size information of an obstacle in a
target area, in a polar coordinate system with a target signal
source as a pole, a target polyline corresponding to the
obstacle in the target area, and determine target information
about the target polyline penetrated by a propagation path
of a target signal

101

Determine signal strength information of a pixel in the
target area based on the target information

102

FIG. 1

Obtain building diagram information, where the building diagram information includes a position of a target signal source, a target area corresponding to the target signal source, size information of one or more obstacles in the target area, type information of the one or more obstacles, and image calibration — 201

Convert the building diagram information into a polar coordinate system, where the position of the target signal source is a pole of the polar coordinate system — 202

Determine an attenuation amount of a target pixel based on the size information, the type information, the image calibration information, and a propagation path, in the polar coordinate system, through which a target signal transmitted by the target signal source is propagated to the target pixel in the area, where the propagation path penetrates at least part of the one or more obstacles — 203

Determine a signal strength of the target pixel based on a signal strength of the target signal source and the attenuation amount of the target pixel — 204

FIG. 2

FIG. 3

FIG. 4

501

Target unit

502

Strength unit

FIG. 5

601

Processor

600

602

Memory

FIG. 6

## INTERNATIONAL SEARCH REPORT

| | International application No. |
|---|---|
| | **PCT/CN2024/085011** |

**A. CLASSIFICATION OF SUBJECT MATTER**

H04B17/318(2015.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT; ENTXTC; ENTXT; VEN; CNKI; IEEE: 信号强度, 建筑, 图, 信号源, 障碍物, 物体, 尺寸, 类型, 坐标, 路径, 衰减, signal strength, architectural, drawing, signal source, obstacle, object, size, type, coordinate, path, attenuation, decrement

**C. DOCUMENTS CONSIDERED TO BE RELEVANT**

| Category* | Citation of document, with indication, where appropriate, of the relevant passages | Relevant to claim No. |
|---|---|---|
| X | CN 110858972 A (CHINA MOBILE (HANGZHOU) INFORMATION TECHNOLOGY CO., LTD. et al.) 03 March 2020 (2020-03-03) description, paragraphs 88-137, and claims 15-16 | 1-5, 7-11, 13-17 |
| X | CN 115002791 A (CHEARI (BEIJING) CERTIFICATION & TESTING CO., LTD.) 02 September 2022 (2022-09-02) description, paragraphs 22-56 | 1-5, 7-11, 13-17 |
| A | US 2023036982 A1 (CISCO TECHNOLOGY, INC.) 02 February 2023 (2023-02-02) entire document | 1-17 |
| A | JP 2022105434 A (KDDI RESEARCH, INC.) 14 July 2022 (2022-07-14) entire document | 1-17 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2024** | **26 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085011**

| Patent document cited in search report | | | Publication date (day/month/year) | Patent family member(s) | | | Publication date (day/month/year) |
|---|---|---|---|---|---|---|---|
| CN | 110858972 | A | 03 March 2020 | CN | 110858972 | B | 05 August 2022 |
| CN | 115002791 | A | 02 September 2022 | CN | 115002791 | B | 29 November 2022 |
| US | 2023036982 | A1 | 02 February 2023 | None | | | |
| JP | 2022105434 | A | 14 July 2022 | JP | 7460558 | B2 | 02 April 2024 |

Form PCT/ISA/210 (patent family annex) (July 2022)

**REFERENCES CITED IN THE DESCRIPTION**

**Patent documents cited in the description**

- CN 202310875603